# EUROPEAN PATENT APPLICATION

(11) **EP 4 659 984 A1**
(43) Date of publication of application: **10.12.2025**
(21) Application number: 25180317.7
(22) Date of filing: 03.06.2025
(51) Int. Cl.: B60K 35/53, B60R 11/02

(54) **DISPLAY DEVICE FOR VEHICLE INTERIOR AND VEHICLE INCLUDING SAME**

(30) Priority: 05.06.2024 CN 202410726753
(71) Applicant: Yanfeng International Automotive Technology Co., Ltd., Shanghai 201306 (CN)
(72) Inventor: JUNWEI, ZHANG, Shanghai (CN)
(74) Representative: Meissner Bolte Partnerschaft mbB

(57) **Abstract**

The present invention relates to a display device for an interior space of a vehicle and a vehicle comprising the same. The display device comprises a display screen; a track configured to provide an arc-shaped trajectory having a varying curvature; and first and second drive mechanisms, each of the first and second drive mechanisms being connected to the display screen and movably mounted to the track. The display device is configured to drive the display screen to move along the arc-shaped trajectory by making the first and second drive mechanisms move synchronously along the track; and drive the display screen to flip by keeping one of the first and second drive mechanisms fixed at either position on the track and moving the other drive mechanisms along the track. The display device is able to meet the viewing needs of people located at different locations in the vehicle, thus enhancing driving and riding experience.

## Description

### TECHNICAL FIELD

The present invention relates to the technical field of vehicle accessories. More particularly, the present invention relates to a display device for an interior space of a vehicle, and to a vehicle comprising such a display device.

### BACKGROUND ART

In recent years, more and more vehicles are equipped with display devices to display information such as navigation, entertainment, vehicle travel conditions, etc. Such display devices are generally fixedly mounted in the interior of the vehicle, for example on a dashboard, or on a back side of front seats, etc. Furthermore, in some vehicles, such display devices may also be designed to be foldably mounted to the inside of a roof so as to be able to be folded and stowed toward the roof when not in use. However, due to mounting location constraints, such display devices often fail to meet the viewing needs of occupants in different positions within the vehicle.

### SUMMARY OF THE INVENTION

It is an objective of the present invention to provide an improved display device for an interior space of a vehicle to meet the viewing needs of people located at different locations in the vehicle, thus enhancing driving and riding experience.

To this end, the present invention provides a display device for an interior space of a vehicle, which comprises a display screen; a track configured to provide an arc-shaped trajectory having a varying curvature; and first and second drive mechanisms, each of the first and second drive mechanisms being connected to the display screen and movably mounted to the track. The display device is configured to drive the display screen to move along the arc-shaped trajectory by making the first and second drive mechanisms move synchronously along the track; and drive the display screen to flip by keeping one of the first and second drive mechanisms fixed at either position on the track and making the other of the first and second drive mechanisms move along the track.

According to the above technical concept, the present invention may further comprise any one or more of the following alternative forms.

In some alternatives, the track is configured to provide an arc-shaped trajectory with continuously varying curvature.

In some alternatives, the first drive mechanism is connected to the display screen via a first link mechanism, the first link mechanism comprises a first shaft pin and a mounting bracket, the first shaft pin is fixedly connected to the first drive mechanism, and one end of the mounting bracket is rotatably mounted on the first shaft pin; the second drive mechanism is connected to the display screen via a second link mechanism, the second link mechanism comprises a second shaft pin and an auxiliary link, the second shaft pin is fixedly connected to the second drive mechanism, and one end of the auxiliary link is rotatably mounted on the second shaft pin; where each of the mounting bracket and the auxiliary link is connected to the display screen.

In some alternatives, each of the first and second drive mechanisms is configured to roll along the track.

In this case, preferably, each of the first and second drive mechanisms comprises a first roller pair and a second roller pair, the first roller pair comprising a first main roller and a first auxiliary roller adapted to rotate about a central axis of the first main roller, and the second roller pair comprising a second main roller and a second auxiliary roller adapted to rotate about a central axis of the second main roller, where a distance between the first main roller and the second main roller remains constant, the first main roller and the second main roller are in contact with a first rolling surface of the track and are adapted to roll along the first rolling surface, and the first auxiliary roller and the second auxiliary roller are in contact with a second rolling surface of the track and are adapted to roll along the second rolling surface.

Further preferably, the first rolling surface and the second rolling surface are oriented in opposite directions to each other.

Further preferably, each of the first and second drive mechanisms comprises: a main bracket to which the first main roller and the second main roller are mounted; a first rocker arm having one end mounted to the main bracket coaxially with the first main roller, such that the first rocker arm is adapted to rotate about the central axis of the first main roller, and having the other end mounted with the first auxiliary roller; and a second rocker arm having one end mounted to the main bracket coaxially with the second main roller, such that the second rocker arm is adapted to rotate about the central axis of the second main roller, and having the other end mounted with the second auxiliary roller.

Further preferably, each of the first and second drive mechanisms further comprises a rocker arm connected to a drive mechanism and adapted to rotate relative to the main bracket.

Further preferably, each of the first and second drive mechanisms further comprises a first and/or a second torsion spring, the first torsion spring being mounted to the main bracket coaxially with the first rocker arm and being adapted to push the first rocker arm, such that the first auxiliary roller is held in contact with the second rolling surface, the second torsion spring being mounted to the main bracket coaxially with the second rocker arm and being adapted to push the second rocker arm, such that the second auxiliary roller is held in contact with the second rolling surface.

Further preferably, the track further comprises a limiting structure configured to prevent the first and second drive mechanisms from deviating from the arc-shaped trajectory.

Further preferably, the limiting structure comprises a first projection provided on the first rolling surface, at least one of the first main roller and the second main roller being provided with a first recess shaped to fit with the first projection, and/or comprises a second projection provided on the second rolling surface, at least one of the first auxiliary roller and the second auxiliary roller being provided with a second recess shaped to fit with the second projection.

In some alternatives, each of the first and second drive mechanisms is configured to slide along the track.

In this case, preferably, a body of each of the first and second drive mechanisms comprises a first circular arc surface, a second circular arc surface, a third circular arc surface, and a fourth circular arc surface, where the first circular arc surface has a same central axis as the second circular arc surface, the third circular arc surface has a same central axis as the fourth circular arc surface, and the first circular arc surface and the third circular arc surface are in contact with a first sliding surface of the track and are adapted to slide along the first sliding surface, the second circular arc surface and the fourth circular arc surface are in contact with a second sliding surface of the track opposite to the first sliding surface and are adapted to slide along the second sliding surface.

Further preferably, each of the first and second drive mechanisms further comprises a rocker arm connected to a drive mechanism and adapted to rotate relative to the body.

Further preferably, the track further comprises a limiting structure configured to prevent the first and second drive mechanisms from deviating from the arc-shaped trajectory.

Further preferably, the limiting structure comprises a first limiting surface and a second limiting surface opposite to each other, each of the first limiting surface and the second limiting surface being perpendicular to the first sliding surface and the second sliding surface, and the body comprises a first limiting rib in contact with the first limiting surface and a second limiting rib in contact with the second limiting surface.

Further preferably, at least one of the first circular arc surface, the second circular arc surface, the third circular arc surface, the fourth circular arc surface, the first limiting rib, and the second limiting rib is provided in an elastic structure and is in an interference fit with the track.

In some alternatives, the drive mechanism comprises: a first motor and a second motor; and a first group of lead screws and a second group of lead screws, where the first group of lead screws is meshed with a output gear of the first motor and is fixedly connected to the rocker arm of the first drive mechanism, and the second group of lead screws is meshed with an output gear of the second motor and is fixedly connected to a rocker arm of the second drive mechanism.

Preferably, the drive mechanism is configured to prevent the output gear of the first motor to be rotated by the first group of lead screws.

Preferably, the drive mechanism is configured to allow the output gear of the second motor to be rotated by the second group of lead screws when an external force applied to the display device is greater than or equal to a predetermined threshold.

Preferably, the rocker arm of the second drive mechanism is provided with a weakening portion arranged to break the rocker arm of the second drive mechanism when the display device is subjected to an external force greater than or equal to a predetermined threshold.

A second aspect of the present invention provides a vehicle including a display device for an interior of a vehicle according to the first aspect of the present invention.

Compared to the prior art, the display device according to the present invention has a number of advantageous effects, in particular: the display device enables the display screen to be moved along an arc-shaped trajectory having a varying curvature in the interior space of the vehicle by means of a drive mechanism, and can be flipped at a position desired or set by the user to be provided for viewing or manipulation by a person in the vehicle.

### BRIEF DESCRIPTION OF THE DRAWINGS

Other features and advantages of the present invention will be better understood from the following detailed description of the preferred embodiments, taken in conjunction with the accompanying drawings. In the drawings, the same reference numerals refer to the same or similar parts.
- FIG. 1A: is a schematic diagram showing a vehicle comprising a display device according to an embodiment of the present invention.
- FIG. 1B: is a schematic diagram showing an interior of a vehicle with a roof display screen in a stowed state.
- FIG. 1C: is a schematic diagram showing an interior of a vehicle with a roof display screen flipped downward.
- FIG. 2A: is a perspective view of a display device according to an embodiment of the present invention, in which a display screen is located at a rear of a roof of a vehicle and in a stowed state.
- FIG. 2B: is another perspective view of a display device with a display screen being located at the front of a roof and in a stowed state.
- FIG. 2C: is another perspective view of a display device with a display screen in a center of a roof and in a stowed state.
- FIG. 2D: is another perspective view of a display device with a display screen in a center of a roof and flipped downward.
- FIG. 3A: is a top view of a display device.
- FIG. 3B: is an enlarged view of an area A in FIG. 3A.
- FIG. 3C: is a view showing an internal configuration of an area B in FIG. 3B.
- FIG. 4A: is another perspective view of the display device with the display screen located at the rear of a roof and in a stowed state.
- FIG. 4B: is an enlarged view of an area C in FIG. 4A, with a main track hidden.
- FIG. 4C: is another enlarged view of an area C in FIG. 4A, with a rear frame assembly hidden.
- FIG. 5A: is a perspective view of a drive mechanism of a display device according to a first embodiment of the present invention.
- FIG. 5B: is another perspective view of the drive mechanism.
- FIG. 5C: is another perspective view of the drive mechanism.
- FIG. 6A: is a side view of a track assembly of the display device.
- FIG. 6B: is a cross-sectional view taken along a plane E-E in FIG. 6A.
- FIG. 7A: is another side view of the track assembly with the drive mechanism located at a rear of a main track.
- FIG. 7B: is an enlarged view of an area F in FIG. 7A.
- FIG. 8A: is another side view of the track assembly with the drive mechanism located in the front of a main track.
- FIG. 8B: is an enlarged view of an area G in FIG. 8A.
- FIG. 9A: is a top view of a display device.
- FIG. 9B: is a cross-sectional view taken along a plane H-H in FIG. 9A.
- FIG. 9C: is a cross-sectional view taken along a plane J-J in FIG. 9A.
- FIG. 9D: is a cross-sectional view taken along a plane K-K in FIG. 9A with a display screen in a stowed state.
- FIG. 9E: is a cross-sectional view taken along a plane K-K in FIG. 9A with a display screen flipped downward.
- FIG. 10A: is a perspective view of a drive mechanism of a display device according to a second embodiment of the present invention.
- FIG. 10B: is another perspective view of the drive mechanism.
- FIG. 11A: is a side view of a track assembly of the display device.
- FIG. 11B: is a cross-sectional view taken along a plane L-L in FIG. 11A.
- FIG. 12A: is another side view of the track assembly with the drive mechanism located at a rear of a main track.
- FIG. 12B: is an enlarged view of an area N in FIG. 12A.
- FIG. 13A: is another side view of the track assembly with the drive mechanism located in the front of a main track.
- FIG. 13B: is an enlarged view of an area P in FIG. 13A.
- FIG. 14A: is a top view of a display device.
- FIG. 14B: is a cross-sectional view taken along a plane Q-Q in FIG. 14A.
- FIG. 14C: is a cross-sectional view taken along a plane R-R in FIG. 14A.
- FIG. 14D: is a cross-sectional view taken along a plane T-T in FIG. 14A with a display screen in a stowed state.
- FIG. 14E: is a cross-sectional view taken along a plane T-T in FIG. 14A with a display screen flipped downward.
Elements in the figures are illustrated for simplicity and clarity and have not necessarily been drawn to scale and shape. It is to be understood that the drawings are designed not only for purposes of illustration and description of the present invention, but also contributes to the limitation of the present invention if necessary.

### DETAILED DESCRIPTION OF THE INVENTION

The implementation and use of the embodiments are discussed in detail below. It is to be understood, however, that the specific embodiments discussed are merely illustrative of specific ways of carrying out and using the present invention, and are not intended to limit the scope of the present invention.

The words "upper", "lower", "front", "rear", "left", "right", etc. indicating directions are not absolute, but relative in describing the structural positions of the respective components herein. For example, when the individual components are arranged as shown in the drawings, these directional expressions are appropriate, but when the positions of the individual components in the drawings are changed, these directional expressions also change accordingly.

In the drawings, an X-direction corresponds to a longitudinal direction of the vehicle, a Y-direction corresponds to a transverse direction perpendicular to a longitudinal direction, and a Z-direction corresponds to a vertical direction opposite to a direction of gravity and perpendicular to the longitudinal and transverse directions.

Further, as used herein, the terms "mounted", "connected", etc. are to be construed broadly unless expressly specified or limited otherwise. For example, the "connected" may be a fixed connection, or may be a detachable connection, or may be integral; it may be a direct connection or an indirect connection, or it may be associated by some action. For a person skilled in the art, the specific meaning of the above terms herein may be appreciated according to specific situations.

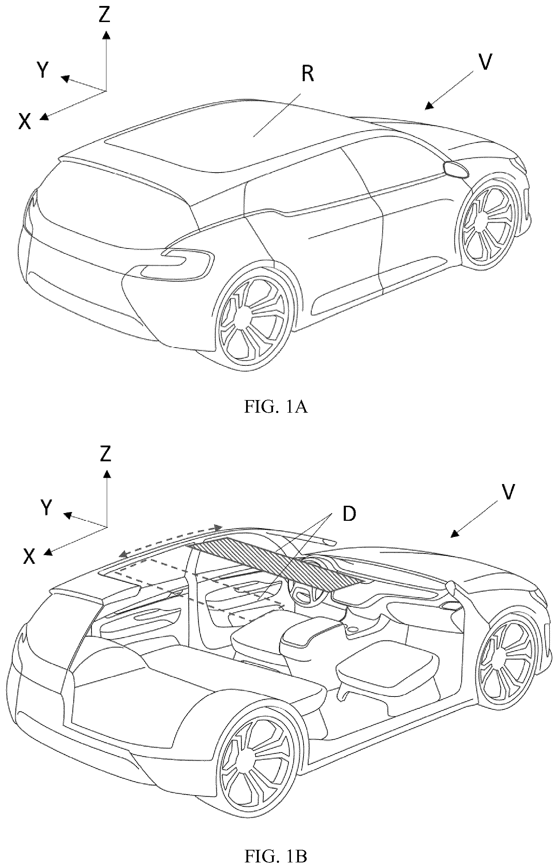

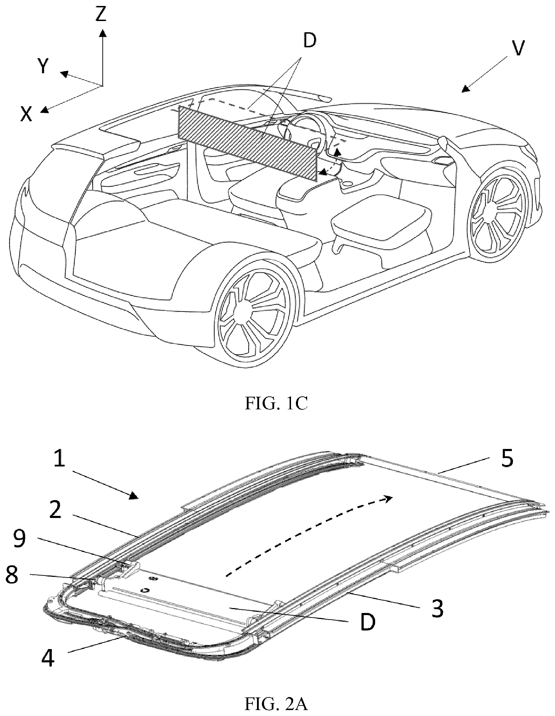

As shown in FIGS. 1A to 1C, the present invention provides a moving and flipping display device for an interior space of a vehicle V, such as a roof space R, which enables a display screen D to move forward and backward in the roof space R along an arc-shaped trajectory having a varying curvature that fits the roof (referring to a dotted arrow in FIG. 1B), and to flip up and down at a position desired or set by a user (referring to a dotted arrow in FIG. 1C) so as to be provided to a person at various positions in the vehicle for viewing and manipulation.

As shown in FIGS. 2A to 4C, the display device 1 according to the present invention mainly comprises: a left track assembly 2, a right track assembly 3, a rear frame assembly 4 (i.e., an motor lead screw mounting bracket assembly), a front cross beam assembly 5, a drive mechanism, a first drive mechanism 6, a second drive mechanism 7, a first link mechanism 8, a second link mechanism 9 and a display screen D.

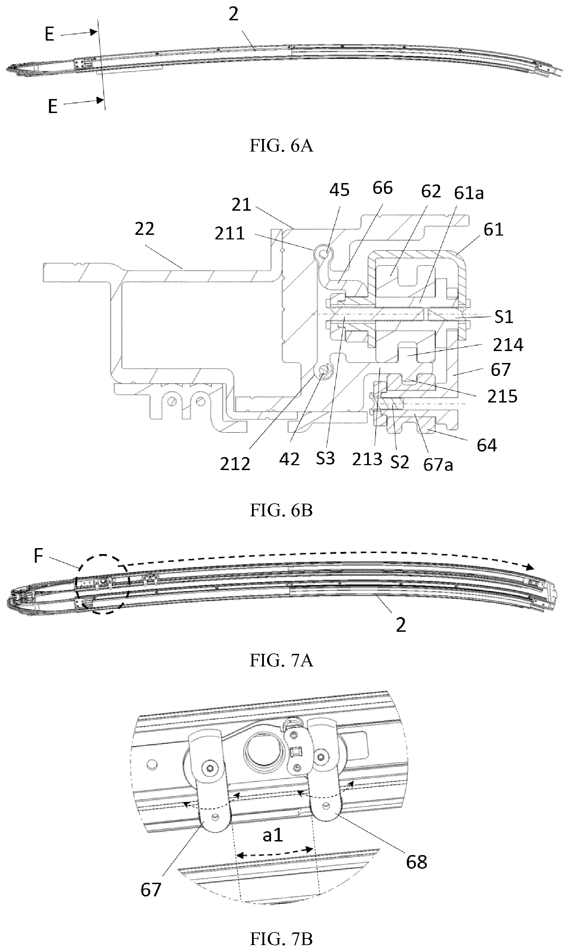

The left track assembly 2, the right track assembly 3, the rear frame assembly 4 and the front cross beam assembly 5 are connected to form a substantially rectangular main frame. The left track assembly 2 comprises a left main track 21 and a left auxiliary track bracket 22 connected to the left main track 21 (referring to FIG. 6B), and the right track assembly 3 symmetrically comprises a right main track and a right auxiliary track bracket connected to the right main track. According to the present invention, the left main track 21 and the right main track are configured to provide a fore and aft movement path having an arc of varying curvature (i.e., varying radius of curvature), e.g., continuously varying curvature, to fit the arc-shape of the roof, while the normal track cross-section at each point on the arc is uniform.

The first and second drive mechanisms 6 and 7 are mounted to the left main track 21 and the right main track and are capable of moving back and forth along the left main track 21 and the right main track. That is, the display device 1 according to the present invention comprises two first drive mechanisms 6 mounted to the left main track 21 and the right main track symmetrically to the left and right, respectively, and two second drive mechanisms 7 mounted to the left main track 21 and the right main track symmetrically to the front and rear, respectively, in front of the two first drive mechanisms 6.

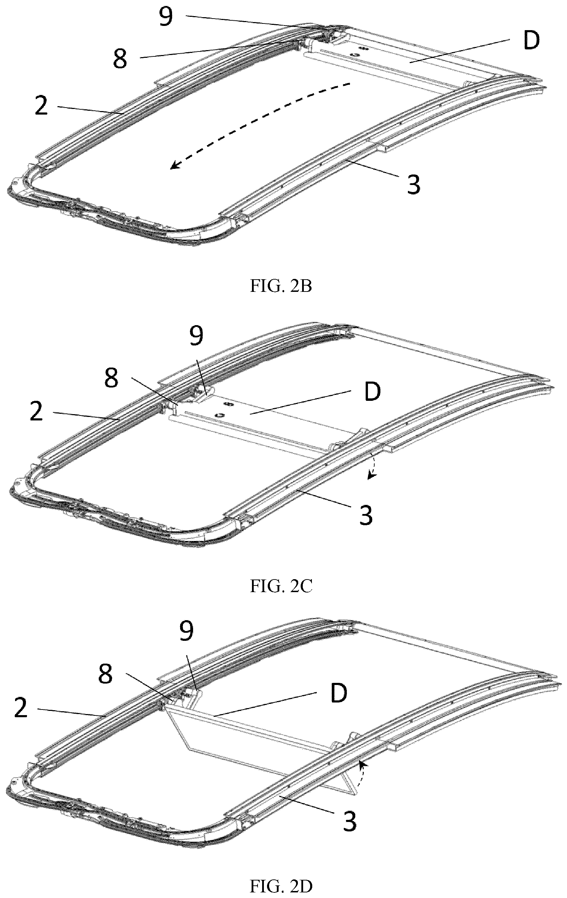

The first drive mechanism 6 is connected to the display screen D via a first link mechanism 8, and the second drive mechanism 7 is connected to the display screen D via a second link mechanism 9. As shown in FIGS. 2A and 2B, in a case where the first drive mechanism and second drive mechanisms 6, 7 are held in a relative position by the driving device and moved forward or backward in synchronization at the same rate, the display screen D can be moved forward or backward in synchronization at that rate along the arc-shaped trajectory of the roof by the first link mechanism 8 and the second link mechanism 9. As shown in FIGS. 2C and 2D, in a case where one of the first drive mechanism and second drive mechanisms 6, 7 (i.e., the first drive mechanism 6 in the figure) is held fixed at any position of the main track by the driving device and the other of the first drive mechanism and second drive mechanisms 6, 7 is moved along the main track (i.e., the second drive mechanism 7 in the figure moves backward along the main track), the display screen D can be driven to flip downward by the second link mechanism 9 so as to be unfolded to a person in the vehicle, and vice versa; in a case where one of the first drive mechanism and second drive mechanisms 6, 7 (i.e., the first drive mechanism 6 in the figure) is held fixed at any position of the main track by the driving device and the other of the first drive mechanism and second drive mechanisms 6, 7 is moved in a reverse direction along the main track (i.e., the second drive mechanism 7 in the figure moves forward along the main track), the display screen D can be driven to be stowed upward by the second link mechanism 9. The specific configuration of the first drive mechanism 6, the second drive mechanism 7, the first link mechanism 8, and the second link mechanism 9 will be described in detail below in connection with various embodiments.

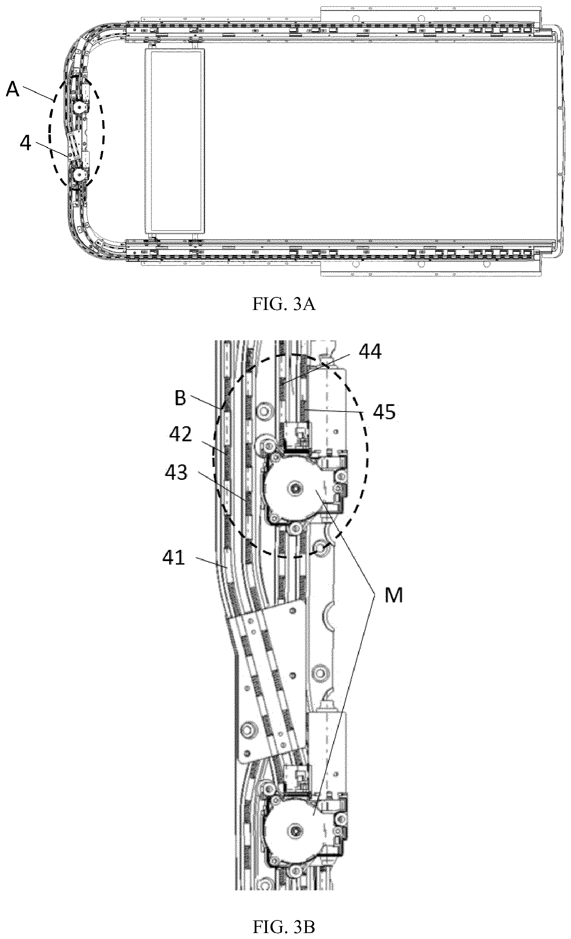

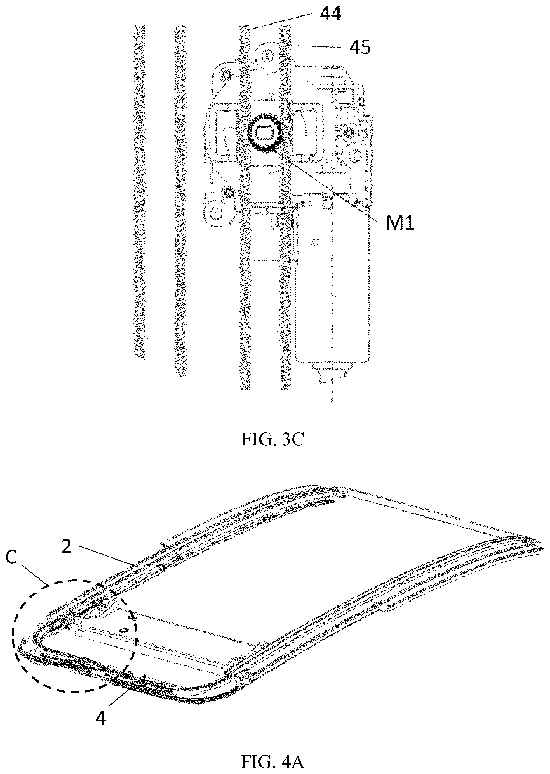

As shown in FIGS. 3A to 3C, the drive mechanism of the display device 1 mainly comprises of motors and lead screws. More specifically, two motors M are mounted on a bracket 41 of the rear frame assembly 4, each of the motors M drives a group of two lead screws (e.g. flexible lead screw) to move, respectively, via an output gear M1. That is, the first motor M drives the first group of two lead screws 44, 45 connected to the left and right first drive mechanisms 6, respectively, to move via the output gear M1, and the second motor M drives the second group of two lead screws 42, 43 connected to the left and right second drive mechanisms 7, respectively, to move via the output gear M1. It will be appreciated that the first group of two lead screws 44, 45 mesh with the output gear M1 of the first motor M and the second group of two lead screws 42, 43 mesh with the output gear M1 of the second motor M, corresponding to a rack-and-pinion fitting arrangement.

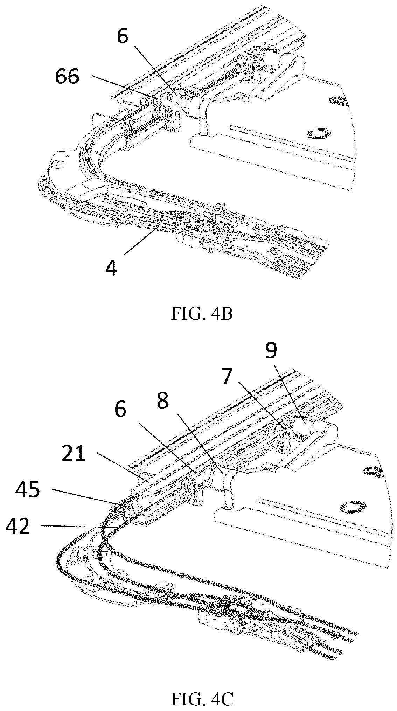

As shown in FIGS. 4A to 4C, the first lead screw 45 is fixedly connected to a rocker arm 66 of the first drive mechanism 6, and pushes or pulls the first drive mechanism 6 to move forward or backward, while the first drive mechanism 6 is pivotally connected to the first link mechanism 8; the second lead screw 42 is fixedly connected to the rocker arm of the second drive mechanism 7, and pushes or pulls the second drive mechanism 7 forward or backward, and the second drive mechanism 7 is pivotally connected to the second link mechanism 9. A right-hand mechanism, which is not shown, is identical in principle to a left-hand mechanism, but only in a mirror-symmetrical relationship. Since the first group of two lead screws 44, 45 are driven by one motor while pushing or pulling the corresponding first drive mechanisms 6, respectively, and the second group of two lead screws 42, 43 are driven by the other motor while pushing or pulling the corresponding second drive mechanisms 7, respectively, the first drive mechanisms 6 on the left and right sides move synchronously, and the second drive mechanisms 7 on the left and right sides also move synchronously. Thus, it is possible to drive the first drive mechanism and second drive mechanisms 6, 7 to move forward or backward in synchronism, or one of them to move forward or backward, by controlling a rotational manner of the two motors.

Furthermore, the first motor M is internally provided with a unidirectional output torque, i.e., having a reverse locking function, or a unidirectional locking mechanism is provided between the first motor M and the output gear M1 meshed with the first group of lead screws 44, 45, so that the first motor M can be driven to and fro the output gear M1 via the unidirectional locking mechanism and drive the first group of lead screws 44, 45 to move, and the first group of lead screws 44, 45 cannot pull the output gear M1 of the first motor M to rotate in a reverse direction. By the one-way locking function, for example, in a case where the display device 1 is subjected to a large impact due to a collision or rapid acceleration of a vehicle V, the display screen D cannot be moved back and forth only by shaking within a small distance range of, for example, not more than 100 mm, so that the display screen D does not cause injury to an occupant.

The second motor M does not have a one-way locking function, or only has a small one-way locking torque of from 0 NM to 10 NM, so as to enable the display screen D to remain stable under a certain external force when the display screen D is flipped to a use position, and in a case where the display device 1 is subjected to a large impact due to, for example, a collision or rapid acceleration of the vehicle V, for example, when the external force is greater than or equal to a predetermined threshold, the second group of lead screws 42, 43 can pull the output gear M1 of the second motor M in a reverse direction to rotate, so that the display screen D can be rotated and stowed under the effect of the external force, so as to realize a collapsing function; therefore, it is possible to ensure the stability when the display device is normally used, and to reduce damage to the occupant in an abnormal state such as a collision of the vehicle.

Furthermore, a weakening structure may be provided on the rocker arm of the second drive mechanism 7 connected to the second group of lead screws 42, 43 and arranged to enable normal operation of the display device 1 when the display device 1 is subjected to normal external forces and accelerations, and the weakening structure in the rocker arm being broken such that the rocker arm is disengaged from the connected second group of lead screws 42, 43, e.g., in a case where a collision or rapid acceleration of the vehicle V which results in a large impact on the display device 1, e.g., when the external force is greater than or equal to a predetermined threshold. As a result, the display screen D can be rotated and stowed by the external force, thereby achieving the collapsing function, thereby ensuring the stability when the display device is normally used, and reducing the injury to the occupant in an abnormal state such as a vehicle collision.

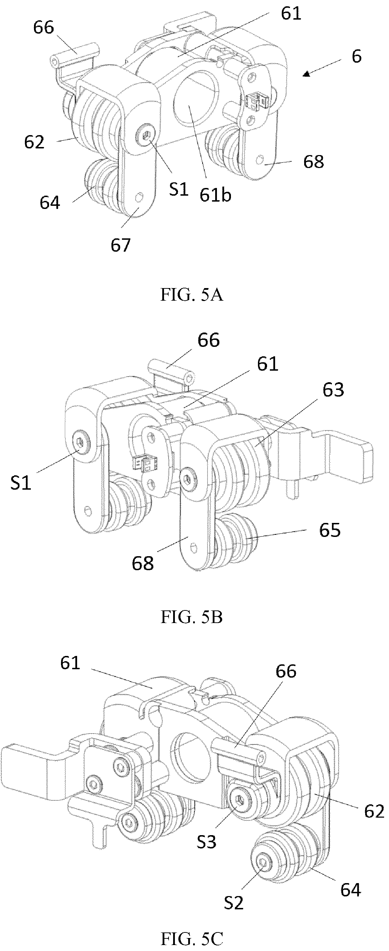

A first embodiment of the first drive mechanism 6 of the display device 1 is described below with the aid of FIGS. 5A to 9E, the configuration of the second drive mechanism 7 being substantially identical to the first drive mechanism 6. According to the first embodiment, each of the first drive mechanism and second drive mechanisms 6, 7 is configured so as to be able to roll along a main track 21, i.e., it is configured as a rolling mechanism.

As shown in FIGS. 5A to 5C, 6A and 6B, the first drive mechanism 6 according to the first embodiment mainly comprises a main bracket 61, a first roller pair, a second roller pair, and a rocker arm 66. The first roller pair comprises a first main roller 62 mounted to the main bracket 61 and a first auxiliary roller 64 mounted to the main bracket 61 via a first rocker arm 67, one end of the first rocker arm 67 is mounted to the main bracket 61 coaxially with the first main roller 62 so that the first rocker arm 67 can rotate about a central axis of the first main roller 62, and the other end of the first rocker arm 67 is mounted with the first auxiliary roller 64 so that the first auxiliary roller 64 can be driven to rotate about a central axis of the first main roller 62. The second roller pair comprises a second main roller 63 mounted to the main bracket 61 and a second auxiliary roller 65 mounted to the main bracket 61 via a second rocker arm 68, a distance between the first main roller 62 and the second main roller 63 remains constant at all times, one end of the second rocker arm 68 is mounted to the main bracket 61 coaxially with the second main roller 63 so that the second rocker arm 68 can rotate about the central axis of the second main roller 63, and the other end of the second rocker arm 68 is mounted with the second auxiliary roller 65 so that the second auxiliary roller 65 can be driven to rotate about the central axis of the second main roller 63.

More specifically, the first main roller 62 and the second main roller 63 are respectively mounted on two upper rotating shaft portions 61a of the main bracket 61 by means of coaxially disposed first screws S1 and third screws S3 and can rotate about the corresponding upper rotating shaft portions 61a so as to fit a trajectory of a main track 21 to roll while bearing a load of the display screen D and being transmitted to the main track 21. The first rocker arm 67 and the second rocker arm 68 are respectively mounted on the corresponding upper rotating shaft portion 61a by means of the first screw S1 and can rotate about the corresponding upper rotating shaft portion 61a. The first auxiliary roller 64 and the second auxiliary roller 65 are respectively mounted on a lower rotating shaft portion 67a of the corresponding rocker arm by means of a second screw S2 and can rotate around the corresponding lower rotating shaft portion 67a to fit the trajectory of the main track 21 for rolling. The first auxiliary roller 64 and the second auxiliary roller 65 are provided to ensure that the first drive mechanism 6 always remains in contact with the main track 21, does not fall off, and does not deviate and can achieve a rolling movement.

In the embodiment shown, the rocker arm 66 is fixedly connected to the first lead screw 45 and is mounted on the main bracket 61 coaxially with the first main roller 62 by means of a third screw S3 so as to be able to rotate relative to the first drive mechanism 6, specifically relative to the main bracket 61 about the central axis of the first main roller 62. It will be understood that the positioning of the rocker arm 66 on the first drive mechanism 6 is not limited and can be determined according to actual configuration, provided only that the rocker arm 66 is rotatable with respect to the main bracket 61.

According to the first embodiment, since the first rocker arm 67 and the second rocker arm 68 are rotatable about the central axes of the first main roller 62 and the second main roller 63, respectively, and the rocker arm 66 is preferably rotatable about the central axis of the first main roller 62, it is possible for the first drive mechanism 6 to roll along an arc-shaped trajectory having a varying curvature.

More specifically, as shown in FIG. 6B, the first lead screw 45 and the second lead screw 42 can slide in the upper lead screw channel 211 and the lower lead screw channel 212 in the main track 21, respectively, the outer circular arc surfaces of the first main roller 62 and the second main roller 63 are in contact with an upper rolling surface and can roll along this upper rolling surface of a rolling fit structure 213 of the main track 21, and the outer circular arc surfaces of the first auxiliary roller 64 and the second auxiliary roller 65 are in contact with a lower rolling surface and can roll along this lower rolling surface of the rolling fit structure 213 of the main track 21 oriented opposite to the upper rolling surface to secure the up-down position of the first drive mechanism 6 in the main track 21.

Preferably, each of the first drive mechanism and second drive mechanisms 6, 7 may further comprise a first torsion spring and/or a second torsion spring (not shown), the first torsion spring being mounted coaxially with the first rocker arm 67 to the main bracket 61, for example, to the corresponding upper rotating shaft portion 61a, and being used to push the first rocker arm 67, so that the first auxiliary roller 64 can be in contact with a lower rolling surface of the main track 21, the second torsion spring being mounted coaxially with the second rocker arm 68 to the main bracket 61, for example, to the corresponding upper rotating shaft portion 61a, and is used to push the second rocker arm 68, so that the second auxiliary roller 65 can be in contact with the lower rolling surface of the main track 21. The above-mentioned torsion spring can achieve the effect of absorbing tolerances, so that the first drive mechanism and second drive mechanisms 6, 7 can better clamp the rolling fit structure 213 of the main track 21 in a up-and-down direction, and so that the first drive mechanism and second drive mechanisms 6, 7 can still clamp the rolling fit structure 213 of the main track 21 even when the main roller or the auxiliary roller is abrased after the first drive mechanism and second drive mechanisms 6, 7 are moved a plurality of times for a long time.

Furthermore, the main track 21 preferably further comprises a limiting structure for preventing the first and second drive mechanisms 6 and 7 from deviating from the set arc-shaped trajectory. More specifically, the limiting structure comprises a first projection 214 provided on an upper rolling surface and a second projection 215 provided on a lower rolling surface, each of the first main roller 62 and the second main roller 63 is provided with a first intermediate recess shaped to fit with the first projection 214, and each of the first auxiliary roller 64 and the second auxiliary roller 65 is provided with a second intermediate recess shaped to fit with the second projection 215, so as to ensure the lateral position of the first drive mechanism 6 on the main track 21, preventing the first drive mechanism 6 from deviating from the set arc-shaped trajectory. It will be appreciated that the limiting arrangement may comprise only one of the first projection 214 and the second projection 215, and that only the corresponding roller may be provided with a recess.

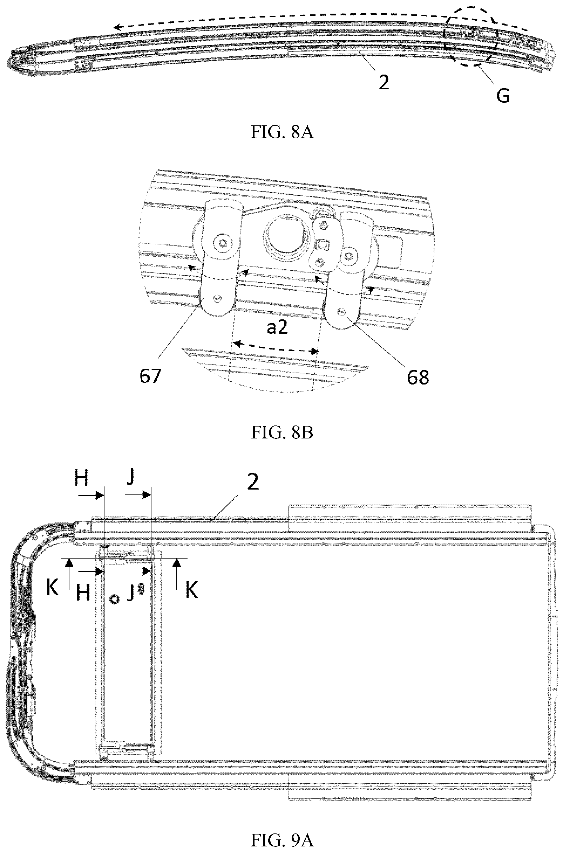

As shown in FIGS. 7A, 7B, 8A, and 8B, an angle a1 (referring to FIG. 7B) between the first rocker arm 67 and the second rocker arm 68 when the first drive mechanism 6 is located at a rear section of the main track 21 differs from an angle a2 (referring to FIG. 8B) between the first rocker arm 67 and the second rocker arm 68 when the first drive mechanism 6 is located at the front section of the main track 21. This difference arises because the the first rocker arm 67 and the second rocker arm 68 are designed to rotate about the central axes of the first main roller 62 and the second main roller 63, respectively, enabling the first main roller 62, the second main roller 63, the first auxiliary roller 64 and the second auxiliary roller 65 to adaptively conform to the varying curvature of the main track 21 at different positions. In the embodiment shown, since the curvature of the rear section of the main track 21 is smaller than that of the front section of the main track 21(i.e., a radius of curvature of the rear section of the main track 21 is greater than that of the front section of the main track 21), a1 is smaller than a2.

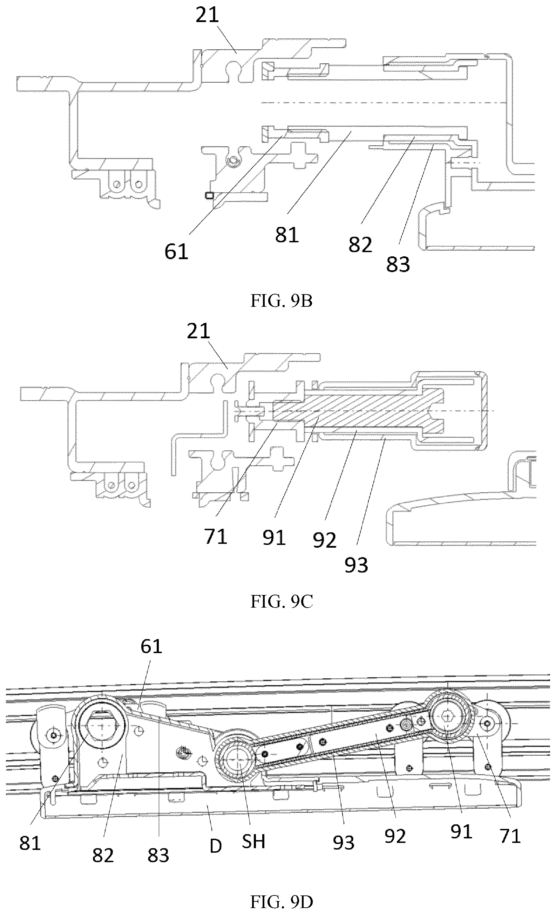

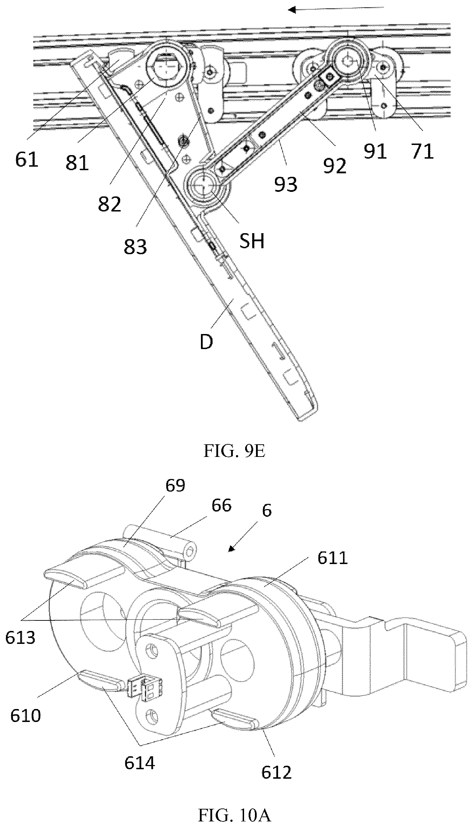

As shown in FIGS. 9A to 9E, the first link mechanism 8 comprises a first shaft pin 81 and a mounting bracket 82. The first shaft pin 81 can be, for example, a bolt shaft pin, fixedly connected to a threaded hole 61b (referring to FIG. 5A) provided in the middle of the main bracket 61 of the first drive mechanism 6 so as to serve as a rotating shaft of the display screen D. The mounting bracket 82 has one end rotatably mounted on the first shaft pin 81 so that the display screen D can be flipped around the first shaft pin 81, and a bracket cover plate 83 is mounted on the outer side of the mounting bracket 82 so as to serve as an appearance member. The second link mechanism 9 comprises a second shaft pin 91 and an auxiliary link 92, where the second shaft pin 91 is, for example, a bolt shaft pin, and is fixedly connected to a threaded hole provided in the middle of the main bracket 71 of the second drive mechanism 7, one end of the auxiliary link 92 is rotatably mounted on the second shaft pin 91, and an auxiliary link cover plate 93 is mounted on the outer side of the auxiliary link 92 so as to serve as an appearance member. The other end of the mounting bracket 82 and the other end of the auxiliary link 92 are respectively connected to the display screen D via a shaft member passing through a shaft hole SH, so that the first drive mechanism 6, the second drive mechanism 7, the first link mechanism 8, and the second link mechanism 9 form a crank slider mechanism. When the first drive mechanism 6 is held stationary on the main track 21 and the second drive mechanism 7 rolls backward on the main track 21 in the direction of the arrow in FIG. 9E, the auxiliary link 92 can be rotated downward about the second shaft pin 91 while moving the second link mechanism 9 backward, so that the display screen D can flip downward about the first shaft pin 81.

A second embodiment of the first drive mechanism 6 of the display device 1 is described below with the aid of FIGS. 10A to 14E, the configuration of the second drive mechanism 7 being substantially identical to the first drive mechanism 6. According to the second embodiment, each of the first drive mechanism and second drive mechanisms 6, 7 is configured so as to be able to roll along a main track 21, i.e., it is configured as a rolling mechanism.

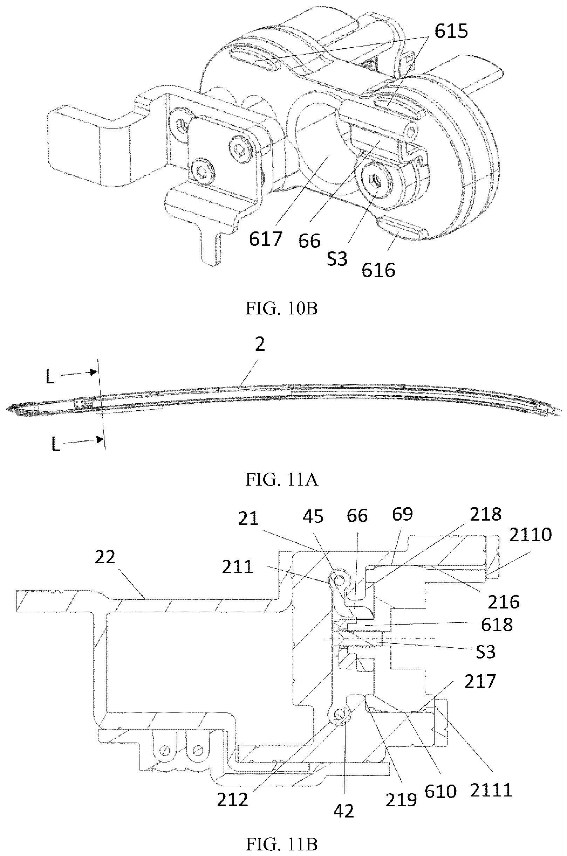

As shown in FIGS. 10A and 10B and FIGS. 11A and 11B, the first drive mechanism 6 according to the second embodiment comprises a slider body and a rocker arm 66. The slider body comprises a first circular arc surface 69, a second circular arc surface 610, a third circular arc surface 611 and a fourth circular arc surface 612, where the first circular arc surface 69 has the same central axis as the second circular arc surface 610, and the third circular arc surface 611 has the same central axis as the fourth circular arc surface 612.

According to the second embodiment, as shown in FIG. 11B, the first lead screw 45 and the second lead screw 42 can slide in the upper lead screw passage 211 and the lower lead screw passage 212 in the main track 21, respectively, the first circular arc surface 69 and the third circular arc surface 611 can be in contact with and slide along the arc-shaped upper sliding surface 216 of the main track 21, and the second circular arc surface 610 and the fourth circular arc surface 612 can be in contact with and slide along the arc-shaped lower sliding surface 217 of the main track 21 opposite to the upper sliding surface 216, so as to secure the upper and lower positions of the first drive mechanism 6 in the main track 21.

Furthermore, the main track 21 preferably further comprises a limiting structure for preventing the first and second drive mechanisms 6 and 7 from deviating from the set arc-shaped trajectory. More specifically, the limiting structure comprises an inner limiting surface and an outer limiting surface opposite to each other, each of the inner limiting surface and the outer limiting surface being perpendicular to the upper sliding surface 216 and the lower sliding surface 217, and the slider body comprises an inner limiting rib in contact with on the inner limiting surface and an outer limiting rib in contact with on the outer limiting surface, so as to ensure the lateral position of the first drive mechanism 6 on the main track 21 and prevent the first drive mechanism 6 from deviating from the set arc-shaped trajectory. More specifically, in the illustrated embodiment, the inner limiting surface comprises an inner upper limiting surface 218 and an inner lower limiting surface 219, the outer limiting surface comprises an outer upper limiting surface 2110 and an outer lower limiting surface 2111, and the slider body comprises an inner upper limiting rib 615 and an inner lower limiting rib 616 that mate with the inner upper limiting surface 218 and the inner lower limiting surface 219, respectively, and an outer upper limiting rib 613 and an outer lower limiting rib 614 that mate with the outer upper limiting surface 2110 and the outer lower limiting surface 2111, respectively. Furthermore, at least one, and preferably each, of the first circular arc surface 69, the second circular arc surface 610, the third circular arc surface 611, the fourth circular arc surface 612, the inner limiting rib, and the outer limiting rib may be provided in an elastic structure and in an interference fit with the corresponding section of the main track 21 so as to be able to compensate for the worn material after long-term moving wear, for example, a circular arc surface may be provided in a cantilever structure so as to allow a certain amount of deformation and in an interference fit with the corresponding section of the main track 21.

In the embodiment as shown, the rocker arm 66 is fixedly connected to the first lead screw 45 and is mounted on a convex shaft portion 618 of the slider body having the same central axis as the first circular arc surface 69 by means of a third screw S3 so as to be rotatable relative to the slider body about the central axis of the first circular arc surface 69. It will be understood that the positioning of the rocker arm 66 on the first drive mechanism 6 is not limited and can be determined according to actual configuration, provided only that the rocker arm 66 is rotatable relative to the first drive mechanism 6, specifically relative to the slider body.

According to the second embodiment, since the first circular arc surface 69 and the second circular arc surface 610 are concentric circular arc surfaces, the third circular arc surface 611 and the fourth circular arc surface 612 are concentric circular arc surfaces, and the rocker arm 66 is preferably rotatable about the central axis of the first circular arc surface 69, that is, the first drive mechanism 6 can be made to slide along this arc-shaped trajectory having a varying curvature.

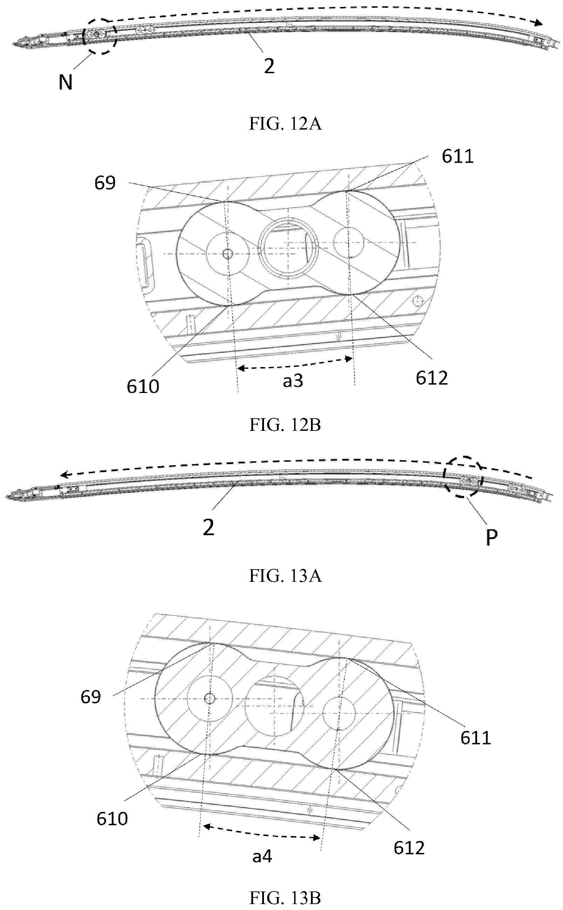

As shown in FIGS. 12A, 12B, 13A, and 13B, when the first drive mechanism 6 is located at the rear of the main track 21, an included angle a3 between a line connecting the contact points of the first circular arc surface 69 and the second circular arc surface 610 with the upper sliding surface 216 and the lower sliding surface 217, respectively, and a line connecting the contact points of the third circular arc surface 611 and the fourth circular arc surface 612 with the upper sliding surface 216 and the lower sliding surface 217, respectively (referring to FIG. 12B) is different from an included angle a4 between a line connecting the contact points of the first circular arc surface 69 and the second circular arc surface 610 with the upper sliding surface 216 and the lower sliding surface 217, respectively, and a line connecting the contact points of the third circular arc surface 611 and the fourth circular arc surface 612 with the upper sliding surface 216 and the lower sliding surface 217, respectively, when the first drive mechanism 6 is located at the front of the main track 21 (see FIG. 13B) for the following reason: the concentric design of the first circular arc surface 69 and the second circular arc surface 610 and the concentric design of the third circular arc surface 611 and the fourth circular arc surface 612 enable the slider body to adaptively fit the different curvatures on the different positions of the main track 21. In the embodiment shown, a3 is smaller than a4 because the curvature of the rear section of the main track 21 is smaller than that of the front section of the main track 21, i.e., a radius of curvature of the rear section of the main track 21 is greater than that of the front section of the main track 21.

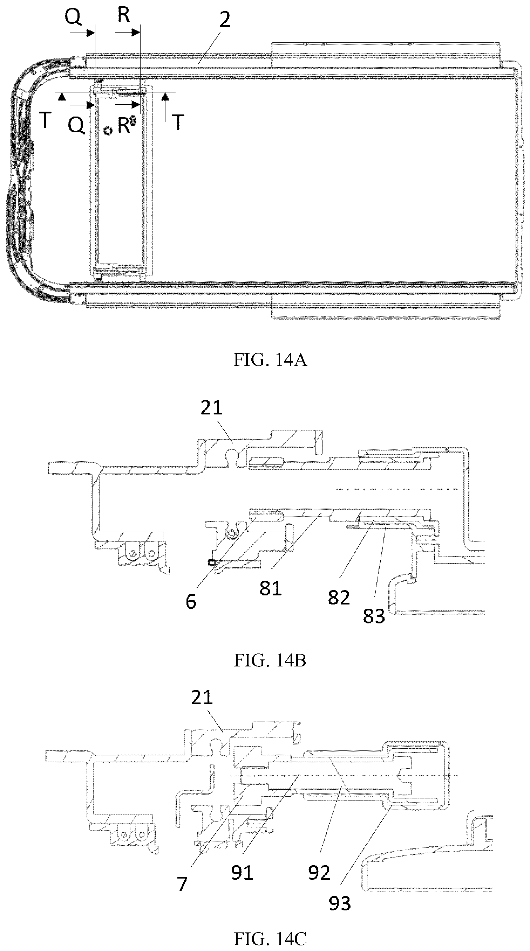

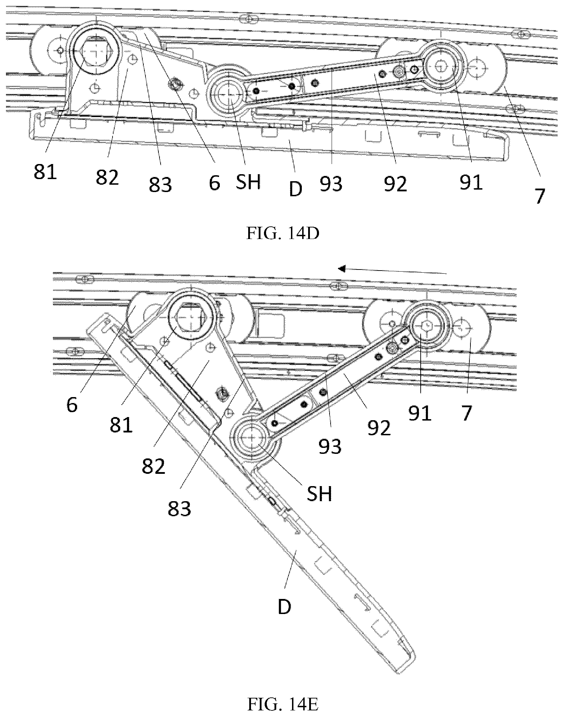

As shown in FIGS. 14A to 14E, the first link mechanism 8 comprises a first shaft pin 81 and a mounting bracket 82. The first shaft pin 81 can be, for example, a bolt shaft pin, fixedly connected to a threaded hole 617 (referring to FIG. 10B) provided in the middle of the slider body of the first drive mechanism 6 so as to serve as a rotating shaft of the display screen D. The mounting bracket 82 has one end rotatably mounted on the first shaft pin 81 so that the display screen D can be flipped around the first shaft pin 81, and a bracket cover plate 83 is mounted on the outer side of the mounting bracket 82 so as to serve as an appearance member. The second link mechanism 9 comprises a second shaft pin 91 and an auxiliary link 92, where the second shaft pin 91 is, for example, a bolt shaft pin, and is fixedly connected to a threaded hole provided in the middle of the slider body of the second drive mechanism 7, one end of the auxiliary link 92 is rotatably mounted on the second shaft pin 91, and an auxiliary link cover plate 93 is mounted on the outer side of the auxiliary link 92 so as to serve as an appearance member. The other end of the mounting bracket 82 and the other end of the auxiliary link 92 are respectively connected to the display screen D via a shaft member passing through a shaft hole SH, so that the first drive mechanism 6, the second drive mechanism 7, the first link mechanism 8, and the second link mechanism 9 form a crank slider mechanism. When the first drive mechanism 6 is held stationary on the main track 21 and the second drive mechanism 7 slides backward on the main track 21 in the direction of the arrow in FIG. 14E, the auxiliary link 92 can be rotated downward about the second shaft pin 91 while moving the second link mechanism 9 backward, so that the display screen D can flip downward about the first shaft pin 81.

It should be noted that the present invention (e.g., inventive concepts, etc.) has been described in the specification of this patent document and/or shown in the figures according to exemplary embodiments; the embodiments of the present invention are presented by way of example only and are not intended to be limiting the scope of the present invention. The structure and/or arrangement of the elements of the inventive concepts embodied in the present invention as described in the specification and/or shown in the figures is merely illustrative. Although exemplary embodiments of the present invention have been described in detail in this patent document, it will be readily understood by a person skilled in the art that equivalents, modifications, variations, etc. of the subject matter of the exemplary embodiments and alternative embodiments are possible and are considered to be within the scope of the present invention; all such subject matter (e.g., modifications, variations, embodiments, combinations, equivalents, etc.) are intended to be included within the scope of the present invention. It should also be noted that various/other modifications, variations, substitutions, equivalents, changes, omissions, etc. may be made in the configuration and/or arrangement of the exemplary embodiments (e.g., in terms of concept, design, structure, apparatus, form, assembly, construction, means, functions, systems, processes/methods, steps, sequence of process/method steps, operations, operating conditions, properties, materials, compositions, combinations, etc.) without departing from the scope of the present invention; all such subject matter (e.g., amendments, variations, embodiments, combinations, equivalents, etc.) is intended to be included within the scope of the present invention. The scope of the present invention is not intended to be limited to the subject matter (e.g., details, structures, functions, materials, behaviors, steps, sequences, systems, results, etc.) described in the specification and/or FIGS. of this patent document. Considering that the claims of this patent document are to be properly construed to cover the full scope of the inventive subject matter (e.g., including any and all such modifications, variations, embodiments, combinations, equivalents, etc.): it is to be understood that the terminology used in this patent document is intended to provide a description of the subject matter of exemplary embodiments and is not intended as a limitation on the scope of the present invention.

It should also be noted that, according to the exemplary embodiments, the present invention may include conventional techniques (e.g., techniques embodied and/or integrated in the exemplary embodiments, modifications, variations, combinations, equivalents), or may include any other applicable techniques (present and/or future) having the ability to perform the functions and processes/operations described in the specification and/or shown in the figures. All of these techniques (e.g., techniques implemented in the form of embodiments, modifications, variations, combinations, equivalents, etc.) are considered to be within the scope of the present invention in this patent document.

## Claims

1. A display device for an interior space of a vehicle, comprising:
- a display screen;
- a track configured to provide an arc-shaped trajectory having a varying curvature; and
- a first and a second drive mechanism, each of the first and second drive mechanisms being connected to the display screen and movably mounted on the track;
wherein the display device is configured to:
- drive the display screen to move along the arc-shaped trajectory by synchronously moving the first and second drive mechanisms along the track; and
- drive the display screen to flip by keeping one of the first and second drive mechanisms fixed at any position on the track and moving the other drive mechanism along the track.

2. The display device according to claim 1,
wherein the track is configured to provide the arc-shaped trajectory with continuously varying curvature.

3. The display device according to claim 1, wherein
- the first drive mechanism is connected to the display screen via a first link mechanism, the first link mechanism comprises a first shaft pin and a mounting bracket, the first shaft pin is fixedly connected to the first drive mechanism, and one end of the mounting bracket is rotatably mounted onto the first shaft pin;
- the second drive mechanism is connected to the display screen through a second link mechanism, the second link mechanism comprises a second shaft pin and an auxiliary link, the second shaft pin is fixedly connected to the second drive mechanism, and one end of the auxiliary link is rotatably mounted on the second shaft pin;
wherein each of the mounting bracket and the auxiliary link is connected to the display screen.

4. The display device according to claim 1,
wherein each of the first and second drive mechanisms is configured to roll along the track.

5. The display device according to claim 4,
wherein each of the first and second drive mechanisms comprises a first roller pair and a second roller pair, the first roller pair comprising a first main roller and a first auxiliary roller adapted to rotate about a central axis of the first main roller, and the second roller pair comprising a second main roller and a second auxiliary roller adapted to rotate about a central axis of the second main roller,
wherein a distance between the first main roller and the second main roller remains constant, the first main roller and the second main roller are in contact with a first rolling surface of the track and are adapted to roll along the first rolling surface, and the first auxiliary roller and the second auxiliary roller in contact with a second rolling surface of the track and are adapted to roll along the second rolling surface.

6. The display device according to claim 5,
wherein the first rolling surface and the second rolling surface are oriented in opposite directions to each other.

7. The display device according to claim 5,
wherein each of the first and second drive mechanisms comprises:
- a main bracket to which the first main roller and the second main roller are mounted;
- a first rocker arm having one end mounted to the main bracket coaxially with the first main roller, such that the first rocker arm is adapted to rotate about the central axis of the first main roller, and having the other end of the first rocker arm mounted with the first auxiliary roller; and
- a second rocker arm having one end mounted to the main bracket coaxially with the second main roller, such that the second rocker arm is adapted to rotate about the central axis of the second main roller, and having the other end of the second rocker arm mounted with the second auxiliary roller.

8. The display device according to claim 7,
wherein each of the first and second drive mechanisms further comprises a rocker arm connected to a drive mechanism and adapted to rotate relative to the main bracket.

9. The display device according to claim 7,
wherein each of the first and second drive mechanisms further comprises a first and/or a second torsion spring, the first torsion spring being mounted to the main bracket coaxially with the first rocker arm and being adapted to push the first rocker arm, such that the first auxiliary roller is held in contact with the second rolling surface, the second torsion spring being mounted to the main bracket coaxially with the second rocker arm and being adapted to push the second rocker arm, such that the second auxiliary roller is held in contact with the second rolling surface.

10. The display device according to claim 5,
wherein the track further comprises a limiting structure configured to prevent the first and second drive mechanisms from deviating from the arc-shaped trajectory.

11. The display device according to claim 10,
wherein the limiting structure comprises a first projection provided on the first rolling surface, at least one of the first main roller and the second main roller being provided with a first recess shaped to fit the first projection, and/or comprises a second projection provided on the second rolling surface, at least one of the first auxiliary roller and the second auxiliary roller being provided with a second recess shaped to fit the second projection.

12. The display device according to claim 1,
wherein each of the first and second drive mechanisms is configured to slide along the track.

13. The display device according to claim 12,
wherein a body of each of the first and second drive mechanisms comprises a first circular arc surface, a second circular arc surface, a third circular arc surface, and a fourth circular arc surface, wherein the first circular arc surface has a same central axis as the second circular arc surface, the third circular arc surface has a same central axis as the fourth circular arc surface, and the first circular arc surface and the third circular arc surface are in contact with a first sliding surface of the track and are adapted to slide along the first sliding surface, the second circular arc surface and the fourth circular arc surface In contact with a second sliding surface of the track opposite to the first sliding surface and are adapted to slide along the second sliding surface.

14. The display device according to claim 13,
wherein each of the first and second drive mechanisms further comprises a rocker arm connected to the drive mechanism and adapted to rotate relative to the body.

15. The display device according to claim 13,
wherein the track further comprises a limiting structure configured to prevent the first and second drive mechanisms from deviating from the arc-shaped trajectory.

16. The display device according to claim 15,
wherein the limiting structure comprises a first limiting surface and a second limiting surface opposite to each other, each of the first limiting surface and the second limiting surface being perpendicular to the first sliding surface and the second sliding surface, and the body comprises a first limiting rib in contact with the first limiting surface and a second limiting rib in contact with the second limiting surface.

17. The display device according to claim 16,
wherein at least one of the first circular arc surface, the second circular arc surface, the third circular arc surface, the fourth circular arc surface, the first limiting rib, and the second limiting rib is provided in an elastic structure and is in an interference fit with the track.

18. The display device according to claim 8 or 14,
wherein the drive mechanism comprises:
- a first motor and a second motor; and
- a first group of lead screws and a second group of lead screws, wherein the first group of lead screws is meshed with an output gear of the first motor and is fixedly connected to the rocker arm of the first drive mechanism, and the second group of lead screws is meshed with an output gear of the second motor and is fixedly connected to a rocker arm of the second drive mechanism.

19. The display device according to claim 18,
wherein the drive mechanism is configured to prevent the output gear of the first motor to be rotated by the first group of lead screws.

20. The display device according to claim 19,
wherein the drive mechanism is configured to allow the output gear of the second motor to be rotated by the second group of lead screws when an external force applied to the display device is greater than or equal to a predetermined threshold.

21. The display device according to claim 19,
wherein the rocker arm of the second drive mechanism is provided with a weakening portion arranged to break the rocker arm of the second drive mechanism when the display device is subjected to an external force greater than or equal to a predetermined threshold.

22. A vehicle, comprising the display device for an interior of a vehicle according to any one of claims 1 to 21.
